# EUROPÄISCHE PATENTANMELDUNG

(11) **EP 0 668 223 A1**
(43) Veröffentlichungstag der Anmeldung: **23.08.1995**
(21) Anmeldenummer: 95102311.8
(22) Anmeldetag: 18.02.1995
(51) Int. Cl.: B65G 51/03, B65G 47/68, B65G 59/02

(54) **Verfahren und Vorrichtung zum Vereinzeln von palettierten PET-Flaschen**

(30) Priorität: 18.02.1994 DE 4405227
(71) Anmelder: Steinle, Karin, D-86356 Neusäss (DE)
(72) Erfinder: Steinle, Rudolf, D-86356 Neusäss (DE)
(74) Vertreter: Gallo, Wolfgang, Dipl.-Ing. (FH)

(57) **Zusammenfassung**

Verfahren und Vorrichtung zur vereinzelten Aufgabe palettiert bereitgestellter PET-Flaschen in die Flaschenführungsschiene eines Luftförderers, indem der jeweils die oberste Lage des palettierten Flaschenstapels bildende Flaschenpack, der eine dichtgepackte, aus mehreren Flaschenreihen zusammengesetzte Konfiguration aufweist, als Ganzes ergriffen und ggf. nach höhenmäßiger Ausrichtung in einen Flaschenrechen eingeschoben wird, der aus einer Anzahl paralleler, der Flaschenführungsschiene (S) entsprechenden Schienenabschnitten mit den Querabständen der Flaschenreihen des Flaschenpacks entsprechenden Querabständen besteht, bis jeder Schienenabschnitt den am Flaschenhals gebildeten Radialflansch aller Flaschen der betreffenden Flaschenreihe untergreift, und anschließend, ggf. nach Aufspreizung des Flaschenrechens zur Ermöglichung einer freien Längsverschiebung der Flaschenreihen, die Schienenabschnitte der Reihe nach mit dem Anfangsende der Flaschenführungsschiene verbunden und die betreffende Flaschenreihe ausgeschoben bzw. ausgeblasen wird.

## Beschreibung

In der Getränkeindustrie werden hauptsächlich für Limonadengetränke in zunehmendem Maße Flaschen aus Kunststoff (PET-Flaschen) verwendet. Die PET-Flaschen werden entweder vom Abfüllbetrieb mit einer Blasmaschine selbst hergestellt oder von Flaschenherstellern auf Paletten gestapelt angeliefert.

Bei Eigenfertigung der Flaschen durch den Abfüllbetrieb können die Flaschen direkt von der Blasmaschine dem Abfüllvorgang zugeführt werden. Da die Blasmaschinen aber nur eine begrenzte Kapazität haben, werden zunehmend die Flaschen entweder aus einer gesonderten eigenen Flaschenfertigung oder von Flaschenherstellern palettiert zur Abfüllanlage angeliefert. Bisher werden die so auf Paletten angelieferten Flaschen mit bekannten Abräumern von den Paletten abgeräumt und in eine sogenannte Flaschenaufrichtmaschine eingeworfen, von welcher aus sie automatisch der Förderanlage zum Transport in die Abfüllanlage zugeführt werden. Da die PET-Flaschen im gegensatz zu Glasflaschen sehr leicht sind, erfolgt der Transport gewöhnlich mit Luftförderern, die eine obere Führungsschiene aufweisen, in welcher die Flaschen hängend durch Anblasen mit Druckluft transportiert werden. Die Flaschen haben dazu einen am Hals angeformten, radial vorstehenden Flansch oder Wulst, und die obere Führungsschiene weist zwei Schenkel auf, die zwischen sich den Flaschenhals aufnehmen und den Flansch bzw. Wulst untergreifen.

Das herkömmliche Verfahren, die Flanken der von den Paletten abzuräumen und in einen Schüttbehälter der Flaschenaufrichtmaschine einzuwerfen und sie sodann mittels der Flaschenaufrichtmaschine wieder aufzustellen und in die Führungsschiene des Luftförderers einzufädeln, ist aber sehr aufwendig und damit teuer.

Der Erfindung liegt die Aufgabe zugrunde, die Vereinzelung und Zuführung von palettiert angelieferten PET-Flaschen in den Luftförderer zu einer Abfüllanlage zu verbessern.

Diese Aufgabe wird gemäß der Erfindung durch das im unabhängigen Verfahrensanspruch angegebene und in den abhängigen Verfahrensansprüchen weiter ausgebildete Verfahren gelöst. Des weiteren umfaßt die Erfindung eine Vorrichtung zur Ausführung des erfindungsgemäßen Verfahrens, die im ersten unabhängigen Vorrichtungsanspruch angegeben und in den abhängigen Vorrichtungsansprüchen weiter ausgebildet ist.

Die Erfindung macht sich also die auf einer Palette naturgemäß gegebene zeilenförmig geordnete Anordnung der Flaschen innerhalb des rechteckigen palettierten Flaschenpacks zunutze, indem der Flaschenpack unter Beibehaltung seiner geordneten Konfiguration zunächst in einen Flaschenrechen eingeführt wird, der aus einer Anzahl mit entsprechenden Abständen parallel verlaufender Führungsschienenabschnitten besteht, die jeweils die Halsflansche aller Flaschen einer Flaschenzeile bzw. Flaschenreihe des Flaschenpacks untergreift. Da die Flaschen im Flaschenpack jeder Lage des Palettenstapels jeweils auf Lücke stehend angeordnet sind, also mit den benachbarten Flaschen jeweils ein Dreieckmuster darstellen, sind die Querabstände der jeweils benachbarten Flaschenreihen kleiner als der Flaschendurchmesser. Deshalb werden nach dem Einschieben des Flaschenpacks in den Flaschenrechen die einzelnen parallelen Führungsschienen des Rechens soweit aufgefächert, daß ihre Mittenabstände etwas größer als ein Flaschendurchmesser sind, und sodann werden die Flaschenreihen, also die an jeweils einer Führungsschiene des Rechens hängenden Flaschen, der Reihe nach in die Führungsschiene des Luftförderers ausgeschoben bzw. ausgeblasen, indem eine Flaschenrechenschiene nach der anderen mit der Führungsschiene des Luftförderers in Verbindung gebracht und entleert wird. Die nacheinander erfolgende Verbindung der Luftfördererführungsschiene mit den Flaschenrechenschienen kann entweder durch schrittweises Verschieben des Flaschenrechens erfolgen oder durch schrittweises Weiterschalten einer zwischen dem Flaschenrechen und der Luftfördererführungsschiene angeordneten Weiche.

Die Erfindung wird nachstehend unter Bezugnahme auf die anliegenden Zeichnungen beispielsweise mehr im einzelnen beschrieben.

In den Zeichnungen stellen dar:
die Figuren 1 bis 6 jeweils in Ansicht und in Draufsicht eine Vorrichtung zum Entpalettieren von PET-Flaschen und zum Einfädeln derselben in die Führungsschiene eines Luftförderers nach dem erfindungsgemäßen Verfahren in sechs aufeinanderfolgenden Arbeitspositionen, und
die Figuren 7 und 8 jeweils eine Stirnansicht des in den Flaschenrechen eingeführten Flaschenpacks in Richtung des Pfeiles A in Fig. 6 vor und nach dem Auffächern der Rechenschienen.

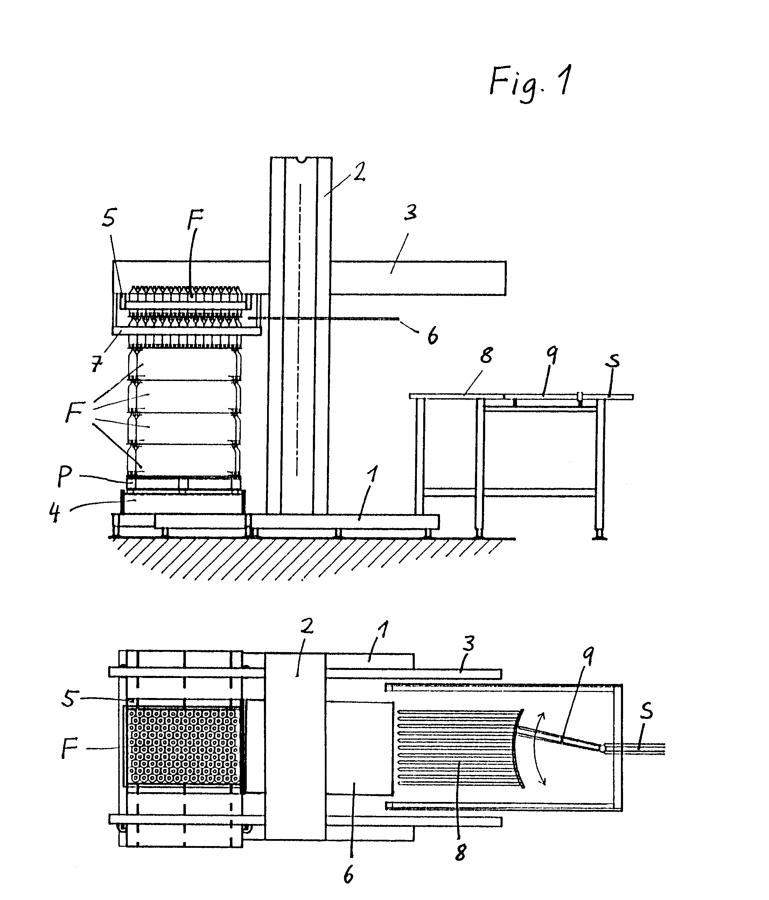

Die Zeichnungen sind sämtlich sehr schematisch gehalten und sollen nur den wesentlichen Aufbau der erfindungsgemäßen Vorrichtung mit ihren Hauptkomponenten und den Ablauf des erfindungsgemäßen Verfahrens verdeutlichen, ohne auf an sich bekannte oder für den Fachmann keine wesentlichen Schwierigkeiten bereitende Einzelheiten näher einzugehen. Jede der Figuren 1 bis 6 zeigt die Vorrichtung in einer von sechs aufeinanderfolgenden Arbeitspositionen sowohl in Seitenansicht als auch in Draufsicht, so daß der Ablauf des erfindungsgemäßen Verfahrens leicht nachvollziehbar ist.

Zunächst sei anhand der Figur 1 der grundsätzliche Aufbau der Vorrichtung erläutert.

Die Vorrichtung weist einen auf einem Sockel 1 angeordneten Ständer 2 und einen am Ständer vertikal verfahrbaren Hubschlitten 3 auf. Auf dem Sockel 1 ist in der Zeichnung links vom Ständer 2 ein Abstellpodest 4 angeordnet, auf welches eine mit einem mehrlagigen Flaschenstapel beladene Palette P aufsetzbar ist. Wie man sieht, trägt die Palette P in der Zeichnung sechs aufeinandergestapelte Flaschenpacks F.

Am Hubschlitten 3 der Vorrichtung sind ein Klemmkopf 5, eine Ladeplatte 6 und ein Lagenzentriermechanismus 7 angeordnet. Der Klemmkopf 5 dient zum klemmenden Erfassen des die jeweils oberste Lage des Flaschenstapels auf der Palette P bildenden Flaschenpacks durch Ergreifen dieses Flaschenpacks an allen vier Seiten. Die Ladeplatte 6 dient zum zeitweiligen Unterstützen des vom Klemmkopf 5 erfaßten und transportierten Flaschenpacks F. Der Lagenzentriermechanismus dient dazu, den eine Lage des Flaschenstapels bildenden Flaschenpack F in der Horizontalebene sauber zu zentrieren, bevor dieser Flaschenpack vom Klemmkopf ergriffen wird.

Auf der in der Zeichnung rechten Seite der Vorrichtung ist der Aufgabeteil 8 eines Luftförderers dargestellt, der ebenfalls einen Teil der erfindungsgemäßen Vorrichtung bildet und mit dem Anfang einer zur Flaschenabfüllanlage führenden Führungsschiene S verbunden ist. Dieser Luftfördereraufgabeteil 8 besteht, wie insbesondere aus der Draufsicht ersichtlich ist, aus einem Flaschenrechen, der sich aus einer Anzahl parallel verlaufender Schienenabschnitte zusammensetzt, deren in der Zeichnung rechte Enden über ein als Weiche dienendes bewegliches Schienenstück 9 wahlweise mit dem Einlaufende der Führungsschiene S verbindbar sind. Dazu liegen die rechten Enden der den Flaschenrechen 8 bildenden Schienenabschnitte, wie aus der Draufsicht ersichtlich, auf einem Kreisbogen.

In der Draufsicht der Fig. 1 ist auch der vom Klemmkopf ergriffene oberste Flaschenpack des Flaschenstapels in der Draufsicht dargestellt, woraus die Anordnung der einzelnen Flaschen ersichtlich ist. Der im Umriß rechteckige Flaschenpack besteht aus einer Anzahl von Flaschenreihen, die jeweils in Längsrichtung des Hubschlittens 3 verlaufen. Dabei stehen die Flaschen der benachbarten Flaschenreihen jeweils um eine halbe Flaschenteilung versetzt, so daß die benachbarten Flaschenreihen des dichtgepackten Flaschenpacks mit ihren gegenüber den benachbarten Reihen jeweils auf Lücke stehenden Flaschen gewissermaßen ineinander verzahnt sind. Die Anordnung der Schienenabschnitte des Flaschenrechens 8 entspricht der Anordnung der Flaschenreihen des Flaschenpacks, d.h. die Anzahl der Schienenabschnitte des Flaschenrechens 8 und ihre gegenseitigen Abstände entsprechen genau der Anordnung und den gegenseitigen Abständen der Flaschenhälse der Flaschenreihen. Die Führungsschiene S und die Schienenabschnitte des Flaschenrechens 8 haben, wie schon eingangs erwähnt, eine etwa hängende U-Form mit zwei nach unten ragenden Schenkeln, die jeweils einwärts weisende Flansche haben, um den an jedem Flaschenhals unterhalb des Flaschenhalsgewindes angeformten radialen Flansch bzw. Wulst zu untergreifen.

Die Schienenabschnitte des Flaschenrechens 8 sind aus der dargestellten Konfiguration um ein gewisses Maß aufspreizbar, d.h. ihre Querabstände können so vergrößert werden, daß sie größer als der Flaschendurchmesser sind und dann die Flaschenreihen unbehindert durch die jeweils benachbarten Reihen in Längsrichtung relativ zueinander verschiebbar sind.

Nunmehr wird der Ablauf des erfindungsgemäßen Verfahrens und zugleich auch die Arbeitsweise der Vorrichtung beschrieben.

Auf dem Abstellpodest 4 steht eine Palette, die sechs aufeinandergestapelte Flaschenpacks F trägt. Der Klemmkopf 5 hat den obersten Flaschenpack ergriffen. Die Palette P war zuvor mit dem darauf befindlichen Flaschenstapel auf das Abstellpodest 4 aufgesetzt worden, während der Hubschlitten 3 in seine oberste Position gefahren war. Danach war der Hubschlitten 3 so abgesenkt worden, daß der Lagezentriermechanismus 7 den obersten Flaschenpack korrekt ausrichten konnte. Danach wurde der Hubschlitten 3 weiter abgesenkt, so daß nun, wie dargestellt, der Klemmkopf 5 den obersten Flaschenpack ergreifen konnte.

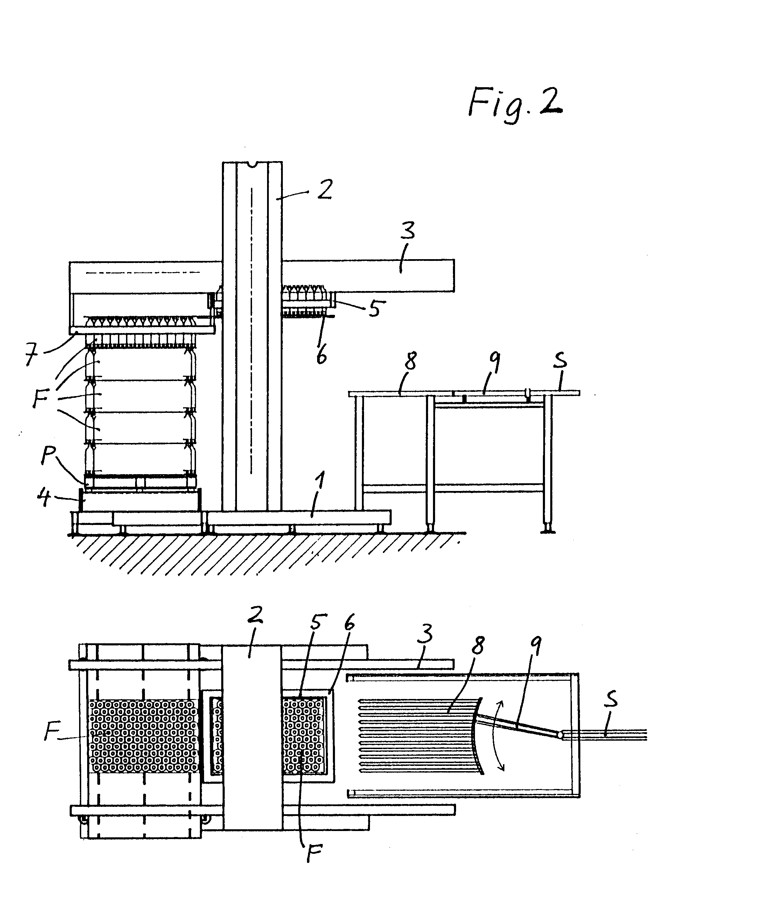

Der Klemmkopf 5 wird nun mit dem ergriffenen Flaschenpack nach rechts in die in Fig. 2 dargestellte Position etwa in der Längsmitte des Hubschlittens 3 über der Ladeplatte 6 verschoben, die den Flaschenpack nun unterstützt. Damit wird verhindert, daß einzelne Flaschen des Flaschenpacks unerwünschter Weise innerhalb des Flaschenpacks vertikal verrutschen können und dadurch die Flaschenhalsflansche der Flaschen des Flaschenpacks nicht mehr alle sauber höhenmäßig ausgerichtet sind.

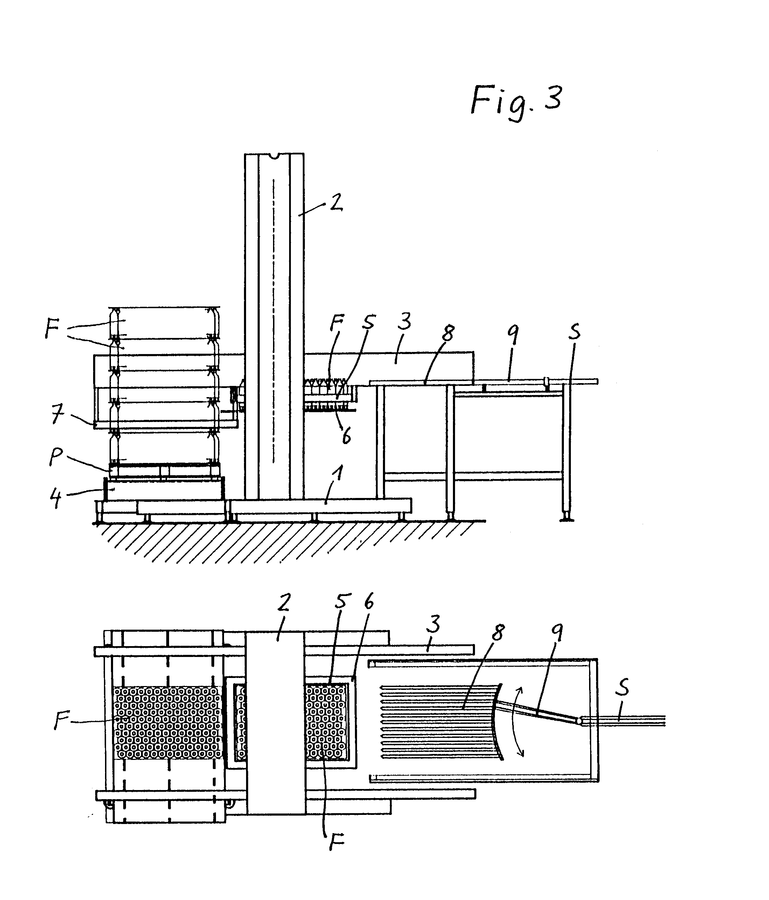

Als nächster Schritt wird nun der Hubschlitten 3 soweit abgesenkt, bis die Radialflansche der Flaschenhälse höhenmäßig auf die Höhenposition der Schienenabschnitte des Flaschenrechens 8 ausgerichtet sind. Diese Position ist in Fig. 3 dargestellt.

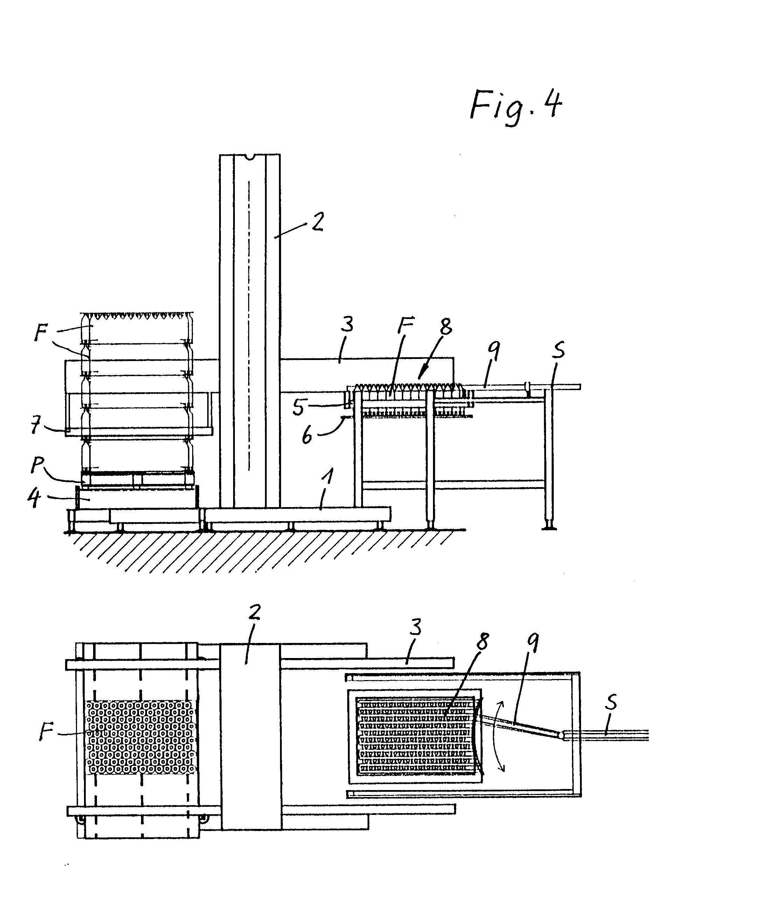

Während der Hubschlitten 3 in dieser Position stehenbleibt, werden nun der Klemmkopf 5 und die Ladeplatte 6 mit dem gehalterten Flaschenpack weiter nach rechts verschoben, so daß die Flaschenhälse mit den Radialflanschen jeder Flaschenreihe in den jeweils damit fluchtend angeordneten Schienenabschnitt des Flaschenrechens 8 eingeführt werden. Es verstehet sich vonn selbst, daß zu diesem Zweck der Klemmkopf 5 in seiner höhenmäßigen Ausdehnung so ausgebildet und seine Arbeitsposition so gewählt ist, daß er den Flaschenpack nur im Bereich der Flaschenbäuche ergreift, die Flaschenhälse aber frei nach oben über den Klemmkopf hinausragen und daher das Einfädeln der Flaschenhälse in den Flaschenrechen erfolgen kann. Die so erreichte Position, in welcher der gesamte Flaschenpack in noch unveränderter Konfiguration in den Flaschenrechen 8 eingeschoben ist, ist in Fig. 4 dargestellt.

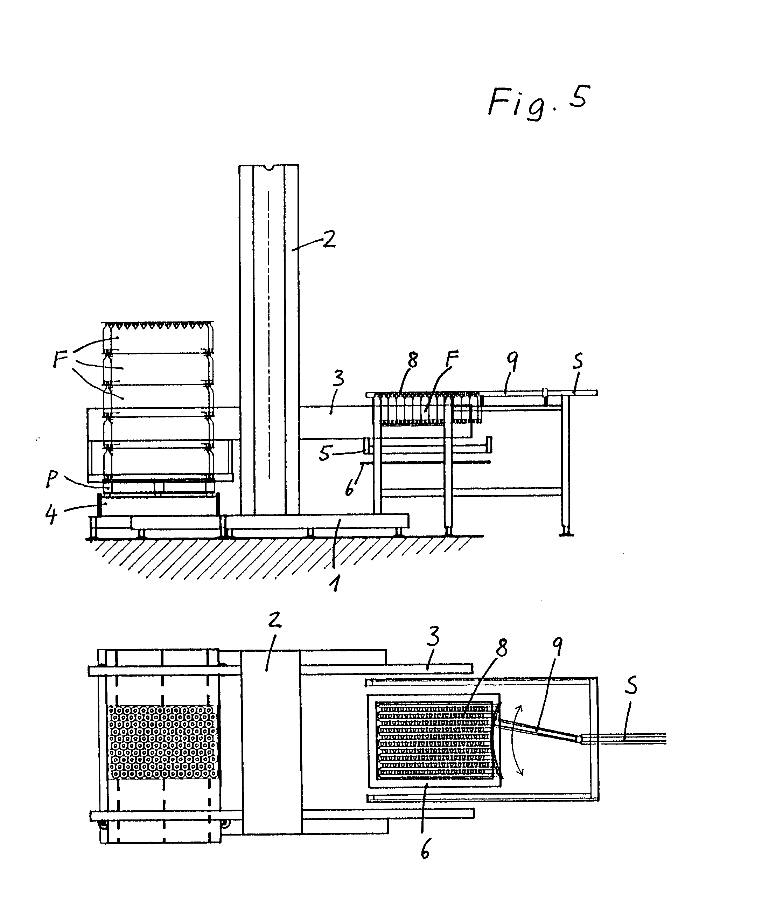

Der Klemmkopf 5 wird nun von dem in den Flaschenrechen eingefädelten Flaschenpack gelöst, und der Klemmkopf und die Ladeplatte 6 werden nach unten bis unterhalb des Flaschenpacks abgesenkt, indem der Hubschlitten 3 entsprechend nach unten verfahren wird. Diese abgesenkte Position des Hubschlittens mit dem Klemmkopf und der Ladeplatte ist in Fig. 5 dargestellt. Die Flaschen hängen nun also frei im Flaschenrechen.

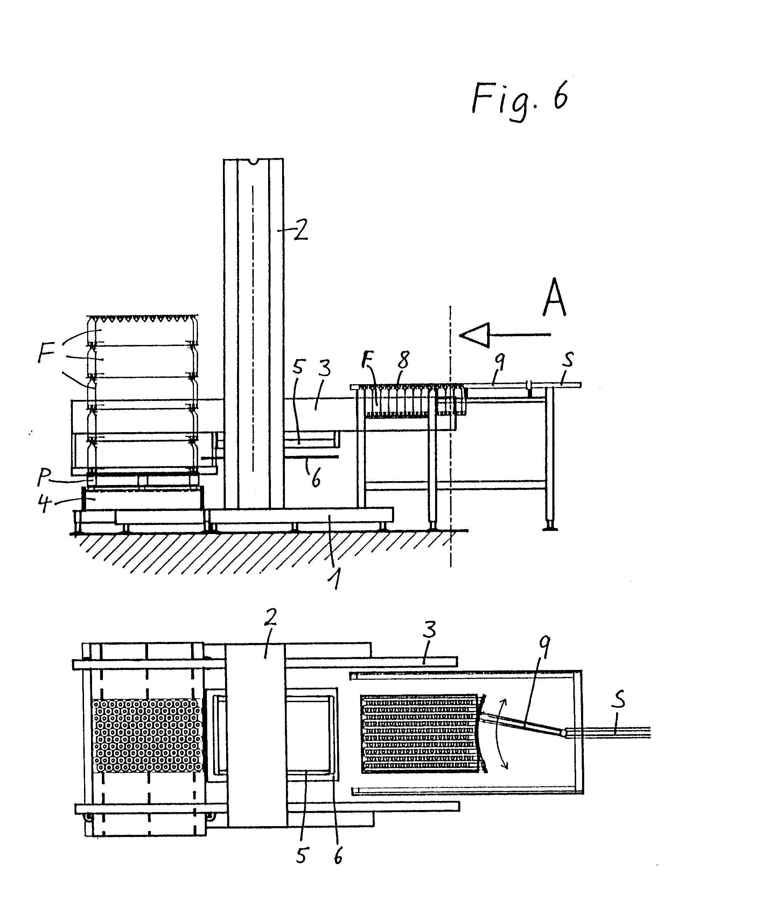

Der Klemmkopf 5 und die Ladeplatte 6 werden nun entlang des abgesenkten Hubschlittens 3 wieder nach links in die mittlere Position verfahren, also in den Bereich des Hubschlittens zwischen dem Palettenstapel und dem Flaschenrechen 8. Diese Position ist in Fig. 6 dargestellt. Der Hubschlitten kann nun wieder über den Flaschenstapel hinaus angehoben werden, um den Klemmkopf wieder ganz nach links über den Palettenstapel fahren und sodann den die nächste Lage des Palettenstapels bildenden Flaschenpack ergreifen zu können.

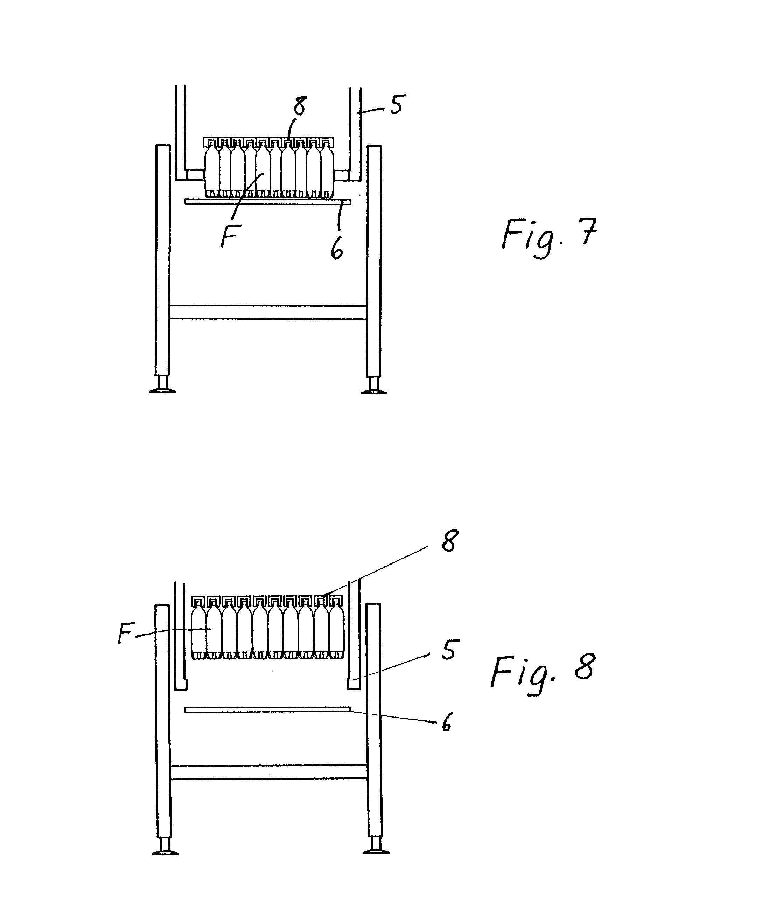

Die im Flaschenrechen 8 hängenden Flaschen befinden sich immer noch in der Anordnungskonfiguration des palettierten Flaschenpacks F, d.h. die Flaschenreihen befinden sich in gegenseitiger Verzahnung aneinander anliegend, so daß es wegen der versetzten ineinandergreifenden Position der Flaschen benachbarter Flaschenreihen noch nicht möglich wäre, die Flaschenreihen relativ zueinander in Längsrichtung zu verschieben. Diese noch gegebene Situation ist in Fig. 7 in Stirnansicht dargestellt.

Der Flaschenrechen 8 wird deshalb nun etwas aufgespreizt, indem die einzelnen Schienenabschnitte des Flaschenrechens in Querrichtung etwas auseinandergeschoben werden, so daß die gegenseitigen Mlttenabstände dieser Schienenabschnitte etwas größer als ein Flaschendurchmesser ist. Diese in Fig. 8 dargestellte aufgefächerte bzw. aufgespreizte Position des Flaschenrechens 8 ermöglicht es nun, jede Flaschenreihe ohne Kollision mit Flaschen einer benachbarten Reihe in Längsrichtung zu verschieben. Deshalb kann nun der Flaschenrechen auf die Führungsschiene S zur Füllanlage entleert werden, indem nacheinander die Flaschenreihen von jedem Schienenabschnitt in die Luftfördererschiene ausgeschoben bzw. ausgeblasen werden. Beim dargestellten Ausführungsbeispiel wird die nacheinander erfolgende Verbindung jedes einzelnen Schienenabschnitts des Flaschenrechens mit der Luftfördererschiene mittels der Weiche 9 hergestellt, indem der die Weiche bildende Schienenabschnitt 9 von einem äußeren Rechenschienenabschnitt ausgehend durch schrittweises Weiterdrehen nacheinander mit allen Rechenschienenabschnitten in Verbindung gebracht wird, um die betreffende Flaschenreihe auf die Luftfördererschiene S zu befördern.

Wie schon eingangs erwähnt, ist es statt der Verwendung einer Weiche auch möglich, den Flaschenrechen an dem angrenzenden Luftfördererschienenende S vorbei in Querrichtung schrittweise zu verschieben, um nacheinander alle Schienenabschnitte mit der Luftfördererschiene in fluchtende Position zu bringen und dann die daran hängende Flaschenreihe auszublasen.

Im Gegensatz zu dem herkömmlichen Verfahren des Einwerfens einer Palettenbeladung in einen Vorratsbehälter und des anschließenden Aufstellens und Einfädelns der einzelnen Flaschen in die Luftfördererschiene besteht das erfindungsgemäße Verfahren, grob zusammengefaßt, also darin, daß jede Packlage eines palettierten Flaschenstapels ohne Veränderung von dessen zeilenförmiger Konfiguration ergriffen und auf einen der Zeilenkonfiguration des Flaschenpacks entsprechenden Flaschenrechen aufgefädelt wird, um sodann nach Vergrößerung des seitlichen Abstände der im Flaschenrechen befindlichen Flaschenreihen diese nacheinander in die Luftfördererschiene entleeren zu können.

## Patentansprüche

1. Verfahren zur vereinzelten Aufgabe von palettiert bereitgestellten PET-Flaschen in einen Luftförderer mit einer Flaschenführungsschiene (S), die einen jeweils am Flaschenhals angeformten Radialflansch untergreift, wobei die bereitgestellten Flaschen in Form von auf einer Palette (P) gestapelten, im Umriß etwa rechtekkigen, dicht gepackten Flaschenpacks (F) palettiert sind und die Flaschen innerhalb des Flaschenpacks parallel verlaufende Flaschenreihen bilden,
dadurch gekennzeichnet, daß eine Anzahl von der Flaschenführungsschiene (S) des Luftförderers entsprechenden Schienenabschnitten in paralleler Anordnung und mit den Querabständen der Flaschenreihen im Flaschenpack entsprechenden Querabständen bereitgehalten und der auf dem palettierten Flaschenstapel jeweils oberste Flaschenpack (F) als Ganzes unter Beibehaltung seiner Konfiguration allseitig ergriffen und, ggfs. nach höhenmäßiger Ausrichtung mit Bezug auf die Schienenabschnitte und Bringen in eine Orientierung, in welcher die Flaschenrechen mit den Schienenabschnitten fluchten, in Längsrichtung der Flaschenreihen in die Schienenabschnitte eingeschoben wird, bis jede Führungsschiene die Halsflansche sämtlicher Flaschen einer Flaschenreihe des Flaschenpacks untergreift, und daß anschließend, ggfs. nach Aufspreizen der Schienenabschnittanordnung auf mindestens dem größten Flankendurchmesser entsprechende Querabstände der Schienenabschnitte, die Schienenabschnitte der Reihe nach mit der Flaschenführungsschiene des Luftförderers in Verbindung gebracht und die betreffende Flaschenreihe aus dem Schienenabschnitt in die Flaschenführungsschiene ausgeschoben bzw. ausgeblasen wird.

2. Verfahren nach Anspruch 1, dadurch gekennzeichnet, daß der ergriffene Flaschenpack während des Transports und des Einschiebens in die Schienenabschnitte mittels einer Platte (6) unterstützt wird.

3. Verfahren nach Anspruch 1 oder 2, dadurch gekennzeichnet, daß der palettierte Flaschenstapel mit Abstand vorderhalb der Schienenabschnitte (8) so abgestellt wird, daß die gestapelten Flaschenpacks (F) mit ihren Flaschenreihen im wesentlichen parallel und fluchtend zu den Schienenabschnitten orientiert sind, sodann der jeweils oberste Flaschenpack des palettierten Flaschenstapels vor seinem Ergreifen in bezüglich der Schienenabschnitte genau parallele und fluchtende Position ausgerichtet, danach ergriffen und vom Palettenstapel in Längsrichtung der Flaschenreihen in eine Position zwischen dem Palettenstapel und den Schienenabschnitten horizontal verschoben, sodann vertikal in eine höhenmäßig mit Bezug auf die Schienenabschnitte ausgerichtete Position verschoben und anschließend wiederum horizontal in die Schienenabschnitte hinein verschoben wird.

4. Verfahren nach einem der Ansprüche 1 bis 3, dadurch gekennzeichnet, daß zur Verbindung der Schienenabschnitte nacheinander mit der Flaschenführungsschiene (S) des Luftförderers ein beweglicher Schienenabschnitt (9) mit seinem einen Ende beweglich mit der Flaschenführungsschiene verbunden und mit seinem freien Ende durch schrittweise Drehbewegung nacheinander mit jedem schienenabschnitt in Verbindung gebracht wird.

5. Verfahren nach einem der Ansprüche 1 bis 3, dadurch gekennzeichnet, daß die Schienenabschnitte durch schrittweise Parallelverschiebung der Schienenabschnittanordung (8) nacheinander mit dem Anfangsende der Flaschenführungsschiene (S) des Luftförderers in Verbindung gebracht werden.

6. Vorrichtung zur Ausführung des Verfahrens nach Anspruch 1, gekennzeichnet durch einen Klemmkopf (5) zum allseitigen Ergreifen des jeweils obersten Flaschenpacks (F) eines palettierten Flaschenstapels, weiter durch einen Flaschenrechen (8), der aus einer Anzahl paralleler, der Flaschenführungsschiene (S) des Luftförderers entsprechenden Schienenabschnitten besteht, die ggfs. zwischen einer verengten Position mit den Querabständen der Flaschenreihen im Flaschenpack entsprechenden Querabständen und einer aufgespreizten Position mit mindestens dem größten Flaschendurchmesser entsprechenden Querabständen verstellbar sind, weiter durch einen Verbindungsmechanismus (9), mit welchem die Schienenabschnitte der Reihe nach mit dem Ende der Flaschenführungsschiene (S) verbindbar sind, und durch einen Transportmechanismus (2, 3) zum horizontalen und vertikalen Verfahren des Klemmkopfes (5).

7. Vorrichtung nach Anspruch 6, dadurch gekennzeichnet, daß der Transportmechanismus einen an einem Ständer (2) vertikal verfahrbar angeordneten länglichen horizontalen Hubschlitten (3) aufweist, an welchem der Klemmkopf (5) in Längsrichtung zwischen einer Position am einen Ende des Hubschlittens oberhalb einer Palettenabstellfläche (4), einer Position am anderen Ende des Hubschlittens in Überdeckung mit dem Flaschenrechen (8), und einer Zwischenposition horizontal verfahrbar ist, in welcher der Klemmkopf zwischen dem palettierten Flaschenstapel und dem Flaschenrechen frei vertikal verschiebbar ist.

8. Vorrichtung nach Anspruch 7, gekennzeichnet durch eine ebenfalls am Hubschlitten (3) angeordnete Ladeplatte (6) zur Unterstützung des ergriffenen Flaschenpacks (F), die an dem Hubschlitten zwischen der sich mit dem Flaschenrechen (8) überdeckenden Endposition und der Zwischenposition des Klemmkopfes gemeinsam mit dem Klemmkopf (5) verfahrbar ist.

9. Vorrichtung nach Anspruch 7 oder 8, dadurch gekennzeichnet, daß an dem über der Palettenabstellfläche (4) befindlichen Bereich des Hubschlittens (3) ein Lagenzentriermechanismus zum genauen parallelen und fluchtenden Ausrichten des jeweils obersten Flaschenpacks (F) des palettierten Flaschenstapels mit Bezug auf den Flaschenrechen (8) vor dem Ergreifen durch den Klemmkopf (5) angeordnet ist.

10. Vorrichtung nach Anspruch 9, dadurch gekennzeichnet, daß der Lagenzentriermechanismus (7) um etwa eine Flaschenhöhe versetzt unterhalb des Klemmkopfes (5) am Hubschlitten (3) angeordnet ist.

11. Vorrichtung nach einem der Ansprüche 6 bis 10, dadurch gekennzeichnet, daß der Verbindungsmechanismus zur Verbindung der Schienenabschnitte des Flaschenrechens (8) mit der Flaschenführungsschiene (S) einen beweglichen Schienenabschnitt (9) aufweist, der mit seinem einen Ende gelenkig mit dem Anfangsende der Flaschenführungsschiene verbunden und nach Art einer Weiche durch schrittweises Drehen mit seinem freien Ende nacheinander mit den einzelnen Schienenabschnitten verbindbar ist.

12. Vorrichtung nach einem der Ansprüche 6 bis 10, dadurch gekennzeichnet, das der Verbindungsmechanismus zum Verbinden der Flaschenführungsschiene mit den Schienenabschnitten des Flaschenrechens einen Querschlitten zur schrittweisen Parallelverschiebung des ggfs. aufgespreizten Flaschenrechens mit Bezug auf das Anfangsende der Flaschenführungsschiene aufweist.
